# EUROPÄISCHE PATENTANMELDUNG

(11) **EP 1 219 162 A1**
(43) Veröffentlichungstag der Anmeldung: **03.07.2002**
(21) Anmeldenummer: 01129613.4
(22) Anmeldetag: 12.12.2001
(51) Int. Cl.: A01F 12/40

(54) **Mähdrescher mit Häckseleinrichtung**

(30) Priorität: 20.12.2000 DE 10063550
(71) Anmelder: DEERE & COMPANY, Moline, Illinois 61265-8098 (US)
(72) Erfinder: Büermann, Martin, Dr., 89437 Haunsheim (DE); Bernhardt, Gerd, Prof. Dr., 01728 Bannewitz/Hänichen (DE); Firus, Siegfried, Dr., 01259 Dresden (DE); Heinrich, André, 02708 Löbau (DE)
(74) Vertreter: Holst, Sönke, Dr.

(57) **Zusammenfassung**

Die Erfindung bezieht sich auf einen Mähdrescher (10), mit einer Gutaufnahmeeinrichtung zur Aufnahme von Erntegut von einem Feld, einer Dresch- und Trenneinrichtung und einer Häckseleinrichtung zum Zerhäckseln von Erntegutresten, die ihr von der Dresch- und Trenneinrichtung zugeführt werden. Um eine definierte Schnittlänge und einen verminderten Energiebedarf zu erzielen, wird vorgeschlagen, dass die Häckseleinrichtung ein Scheibenradhäcksler (42) ist.

## Beschreibung

Die Erfindung betrifft einen Mähdrescher, mit einer Gutaufnahmeeinrichtung zur Aufnahme von Erntegut von einem Feld, einer Dresch- und Trenneinrichtung und einer Häckseleinrichtung zum Zerhäckseln von Erntegutresten, die ihr von der Dresch- und Trenneinrichtung zugeführt werden.

Bei Mähdreschern finden im Stande der Technik Strohhäcksler Verwendung, die von den Schüttlern bzw. Rotoren der Dresch- und Trenneinrichtung ausgeworfene, von Korn befreite Erntegutreste zerhäckseln und auf dem Feld auswerfen. Die bekannten Strohhäcksler weisen in der Regel pendelnd an einem rotierenden Drehkörper gelagerte Messer auf, die die Erntegutreste im Zusammenwirken mit ortsfesten Gegenmessern zerteilen. Als nachteilig ist dabei der relativ hohe Leistungsbedarf und der nicht immer hinreichende Zerkleinerungsgrad anzusehen.

Aus einem undatierten Prospekt "Don Grain Combines" ist ein Trommelhäcksler bekannt, der als Strohhäcksler an der Rückseite eines Mähdreschers anbringbar ist. Derselbe Trommelhäcksler kann auch an einem Pflücker angebracht werden, um die Erntegutreste zu zerhäckseln und in einem Behälter zu verbringen oder auf dem Feld abzulegen.

In der DE 196 01 421 A ist ein Maispflücker beschrieben, bei dem die Maiskolben einem Mähdrescher zugeführt und die von den Maiskolben getrennten Pflanzenstängel mittels eines Scheibenradhäckslers verarbeitet werden.

Die der Erfindung zugrunde liegende Aufgabe wird darin gesehen, einen Mähdrescher mit einer Häckseleinrichtung für ausgedroschene Erntegutreste zu schaffen, die einen geringen Leistungsbedarf und einen hohen Zerkleinerungsgrad des gehäckselten Materials aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, die von den Schüttlern eines konventionellen Mähdreschers oder den Rotoren eines Axialmähdreschers bereitgestellten, ausgedroschenen Erntegutreste einem Scheibenradhäcksler zuzuführen. Auf diese Weise erhält man eine definierte, durch die Zuführgeschwindigkeit der Erntegutreste bestimmte Schnittlänge, eine hohe Wurfweite und einen relativ geringen Energiebedarf.

Der Scheibenradhäcksler umfasst wenigstens ein Scheibenrad, das um eine vorzugsweise zumindest etwa vertikale Achse in Rotation versetzt wird. Die Erntegutreste können somit von oben zugeführt und in horizontaler Richtung bezüglich der Vorwärtsfahrtrichtung des Mähdreschers nach hinten bzw. zur Seite ausgeworfen werden.

Grundsätzlich wäre denkbar, dem Scheibenradhäcksler die Erntegutreste allein durch Wirkung der Schwerkraft zuzuführen. Die von der Dresch- und Trenneinrichtung des Mähdreschers bereitgestellten Erntegutreste werden dem Scheibenradhäcksler aber vorzugsweise durch eine Zuführeinrichtung zugeführt, die wenigstens zwei zusammenwirkende Zuführwalzen umfasst, welche gegensinnig rotieren und zwischen denen die Erntegutreste gefördert werden. Die Zuführwalzen verdichten die Erntegutreste vor und führen sie dem Scheibenradhäcksler zwangsweise zu. Die Erntegutreste werden dem Scheibenradhäcksler somit geordnet und als Matte zugeführt, so dass deren problemlose Annahme gewährleistet ist. Es ist auch denkbar, zwei Paare von Zuführwalzen in Flussrichtung hintereinander anzuordnen, oder eine ungeradzahlige Anzahl von Zuführwalzen zu verwenden. Als Zuführwalzen können auch gesteuerte Zinkenwalzen oder Raffer in der Art einer Haspel Verwendung finden.

Zur Schnittlängeneinstellung kann die Drehzahl der Zuführwalzen einstellbar sein, wozu ein stufenlos oder in Stufen verstellbares Schnittlängengetriebe Verwendung finden kann.

Die Verwendung einer angetriebenen Zuführeinrichtung ermöglicht, an der Einlassöffnung des Scheibenradhäckslers eine Gegenschneide vorzusehen. Man erhält dadurch einen sauberen Schnitt bei geringem Leistungsbedarf.

Falls die Kapazität einer Häckseleinrichtung mit nur einem Scheibenrad nicht ausreichen sollte, bietet sich an, zwei Scheibenräder seitlich nebeneinander anzubringen. Ihre Drehachsen können parallel oder relativ zueinander geneigt verlaufen. Dabei ist denkbar, die Scheibenräder in ein gemeinsames Gehäuse einzubauen oder zwei getrennte Gehäuse zu verwenden.

Es ist auch denkbar, ein relativ großes Scheibenrad zu verwenden, dem durch zwei seiner Drehachse radial gegenüberliegende Einlassöffnungen jeweils ein Teil des Flusses der Erntegutreste zugeführt wird. Es kann ein einziges derartiges Scheibenrad Verwendung finden, oder zwei (oder noch mehr) kleinere von ihnen können nebeneinander angeordnet sein.

In einer bevorzugten Ausführungsform ist das Gehäuse der Häckseleinrichtung mit einem oder mehreren rohrförmigen Auswurfstutzen versehen, durch den (bzw. die) die gehäckselten Erntegutreste ausgeworfen werden. Der Auswurfstutzen oder ein an ihm dreh- oder schwenkbar angebrachtes Endstück kann um eine vertikale Achse beweglich sein, um das Häckselgut in unterschiedliche Richtungen auswerfen zu können. Die Schwenkbewegung kann kontinuierlich erfolgen, um die Erntegutreste über die Breite des von einem Mähdrescher aufgenommenen Schwads zu verteilen. Denkbar ist auch, den oder die Auswurfstutzen anhand der Windrichtung oder der Geländeneigung zu verschwenken und jeweils an einer anhand gemessener oder von einem Bediener eingegebener Bedingungen festgelegten Position stehen zu lassen.
Ein Scheibenradhäcksler ist grundsätzlich gegenüber Fremdkörpern empfindlich. Bei einem Mähdrescher gelangen oft Metallteile zur Häckseleinrichtung, die von ihm selbst stammen, wie Ährenheber, Einzugsfinger oder Zapfen eines Trennrotors. Daher ist bevorzugt, dem Fluss der Erntegutreste stromauf der Häckseleinrichtung eine Fremdkörpernachweiseinrichtung zuzuordnen. Letztere erkennt eventuell im Erntegutrestefluss enthaltene Fremdkörper und steuert bei Erkennung eines Fremdkörpers eine Einrichtung, die den Erntegutrestefluss anhält (unterbricht) oder ablenkt, so dass der nachgewiesene Fremdkörper nicht in den Scheibenradhäcksler gelangt. Wenn die Fremdkörpernachweiseinrichtung eine Unterbrechung des Erntegutresteflusses bewirkt, kann die Bedienungsperson den Fremdkörper aus den Erntegutresten entfernen. Wird der den Fremdkörper enthaltende Erntegutrestefluss an der Häckseleinrichtung vorbeigeleitet, kann der Erntegutrestefluss selbsttätig wieder in die Häckseleinrichtung geleitet werden, sobald nach dem Nachweis eines Fremdkörpers eine hinreichend lange Zeit abgelaufen ist. Auf diese Weise vermeidet man eine Unterbrechung des Betriebs des Mähdreschers. Die Fremdkörpernachweiseinrichtung kann beispielsweise als induktiver Metalldetektor realisiert werden oder mit Ultraschall arbeiten, wobei auch jede andere geeignete Ausführungsform anwendbar ist.

In den Zeichnungen sind acht nachfolgend näher beschriebene Ausführungsbeispiele der Erfindung dargestellt. Es zeigt:
- Fig. 1: eine Seitenansicht eines Mähdreschers mit einer ersten Ausführungsform einer erfindungsgemäßen Häckseleinrichtung;
- Fig. 2: eine rückwärtige Ansicht der Häckseleinrichtung der Figur 1;
- Fig. 3: eine rückwärtige Ansicht einer zweiten Ausführungsform einer Häckseleinrichtung;
- Fig. 4: einen horizontalen Schnitt durch die Häckseleinrichtung der Figur 3;
- Fig. 5: eine rückwärtige Ansicht einer dritten Ausführungsform der Häckseleinrichtung;
- Fig. 6: einen horizontalen Schnitt durch die Häckseleinrichtung der Figur 5;
- Fig. 7: eine Draufsicht auf eine vierte Ausführungsform einer Häckseleinrichtung;
- Fig. 8: eine Seitenansicht einer fünften Ausführungsform einer Häckseleinrichtung;
- Fig. 9: eine Seitenansicht der Häckseleinrichtung der Figur 8 bei an der Häckseleinrichtung vorbeigeführtem Gutfluss;
- Figur 10: eine rückwärtige Ansicht einer sechsten Ausführungsform einer Häckseleinrichtung;
- Figur 11: eine rückwärtige Ansicht einer siebten Ausführungsform einer Häckseleinrichtung;
- Figur 12: eine Seitenansicht einer achten Ausführungsform einer Häckseleinrichtung; und
- Figur 13: eine Draufsicht auf die Häckseleinrichtung der Figur 12.

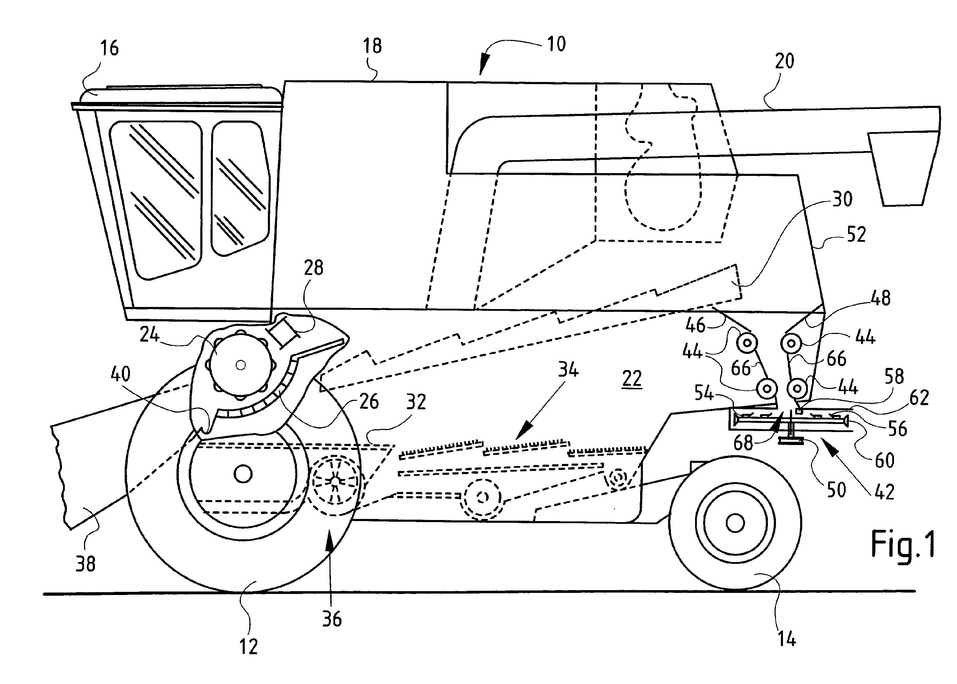

Ein in Figur 1 gezeigter Mähdrescher 10 ist auf vorderen angetriebenen und rückwärtigen lenkbaren Rädern 12 bzw. 14 getragen und weist eine Fahrerkabine 16 auf, von der aus er von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutreste über die Schüttler 30 und Strohleitbleche 46, 48 einer unterhalb einer Strohausfallhaube 52 angeordneten Häckseleinrichtung zugeführt werden und leichte Bestandteile mittels eines Gebläses 36 von den Sieben 34 auf den Boden geblasen werden. Es wäre auch denkbar, diese als Spreu bezeichneten Bestandteile ebenfalls der Häckseleinrichtung zuzuführen, um sie über einen weiten Bereich auf dem Boden des Feldes zu verteilen. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Die fast vollständig von Nutzbestandteilen befreiten Erntegutreste fallen an der Rückseite der Schüttler 30, geleitet durch das in Fahrtrichtung vor der Häckseleinrichtung 42 liegende Strohleitblech 46 und das an der Rückwand der Strohausfallhaube 52 angebrachte Strohleitblech 48, zwischen ein oberes Paar von zusammenwirkenden, gegensinnig rotativ angetriebenen Zuführwalzen 44. Die oberen Zuführwalzen 44 fördern die Erntegutreste nach unten und führen sie einem unteren Paar von Zuführwalzen 44 zu, die ebenfalls gegensinnig rotativ angetrieben werden und die Erntegutreste nach unten fördern. Die Zuführwalzen 44 können glatte oder profilierte Oberflächen aufweisen. Zwischen den oberen und unteren Zuführwalzen 44 wird der Erntegutrestefluss durch Leitbleche 66 geführt. Die unteren Zuführwalzen 44 führen die Erntegutreste als Matte mit definierter Geschwindigkeit der Einlassöffnung 68 der Häckseleinrichtung zu, die erfindungsgemäß als Scheibenradhäcksler 42 ausgeführt ist.

Der Scheibenradhäcksler 42 umfasst ein um eine zentrale, vertikale Achse drehbares Scheibenrad 54, das über eine Riemenscheibe 50 und in der Zeichnung nicht dargestellte Riemen und weitere Kraftübertragungselemente durch den Hauptmotor des Mähdreschers in Drehung versetzt wird. Das Scheibenrad 54 ist an seiner Oberseite und seiner Unterseite über nicht in der Zeichnung dargestellte Lager drehbar am Rahmen 22 abgestützt. Über die Oberseite des Scheibenrads 54 ist eine Anzahl von Messern 56 gleichmäßig verteilt, die etwa radial orientierte Schnittkanten aufweisen, welche die Erntegutreste im Zusammenwirken mit einer ortsfesten, neben der Einlassöffnung 68 des Scheibenradhäckslers 42 angeordneten Gegenschneide 58 zerhäckseln. Durch die Fördergeschwindigkeit der unteren Zuführwalzen 44, die Drehgeschwindigkeit des Scheibenrads 54 und die Anzahl der Messer 56 ist die Schnittlänge der Erntegutreste vorgegeben. Über den Umfang des Scheibenrads 54 sind eine Anzahl von Paddeln 60 verteilt, die die gehäckselten Erntegutreste durch einen Auswurfstutzen 62 nach hinten auf das Feld auswerfen.

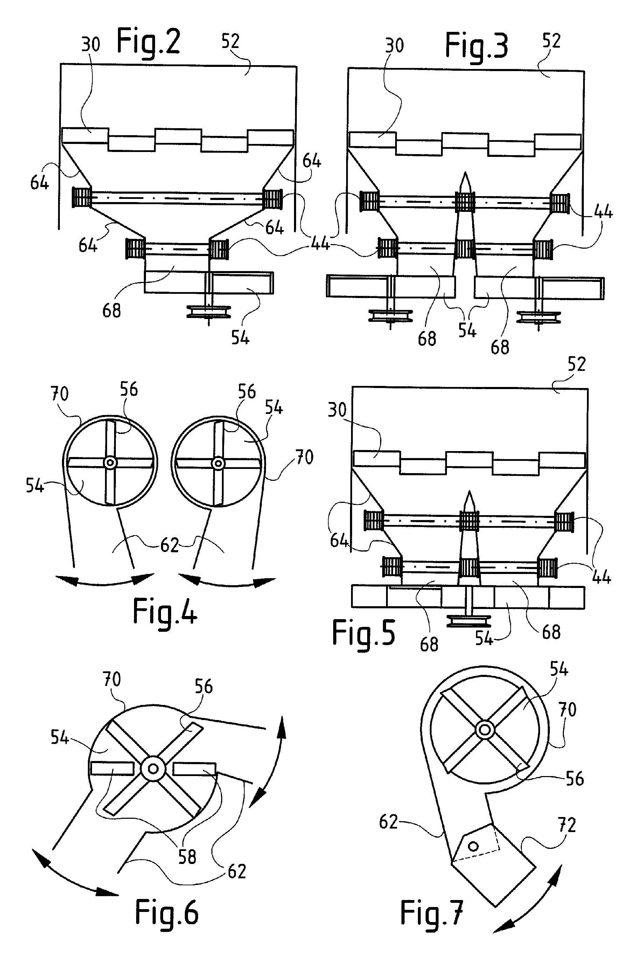

In Figur 2 ist erkennbar, dass der Fluss der Erntegutreste durch seitliche, sich trichterförmig nach unten verengende Strohleitbleche 64 geführt wird, und sich dementsprechend in seitlicher Richtung kontinuierlich verengt. In Fahrtrichtung verengt er sich ebenfalls, da der Abstand zwischen den unteren Zuführwalzen 44 geringer ist als der zwischen den oberen Zuführwalzen 44. Die unteren Zuführwalzen 44 werden vorzugsweise schneller als die oberen Zuführwalzen 44 angetrieben, um einen Stau der Erntegutreste zu vermeiden. Wegen der seitlichen Verengung sind die oberen Zuführwalzen 44 kürzer als die unteren Zuführwalzen 44.

Figur 3 zeigt eine zweite Ausführungsform einer erfindungsgemäßen Häckseleinrichtung, bei der zur Kapazitätsvergrößerung zwei Scheibenradhäcksler 42 seitlich nebeneinander angeordnet sind. Dementsprechend sind jeweils zwei Paare unterer Zuführwalzen 44 und oberer Zuführwalzen 44 vorgesehen. Der Fluss der Erntegutreste verengt sich auch in dieser Ausführungsform trichterförmig nach unten. Anhand des in Figur 4 dargestellten horizontalen Schnitts durch die Scheibenradhäcksler 42 der Figur 3 ist die sternförmige, radiale Anordnung der Messer 56 auf dem Scheibenrad 54 erkennbar. Außerdem ist ersichtlich, dass die Scheibenräder 54 in separaten Gehäusen 70 angeordnet sind, an die die rohrförmigen, mit rechteckigem Querschnitt versehenen Auswurfstutzen 62 angeformt oder angebracht sind. Die Auswurfstutzen 62 sind gemeinsam mit dem Gehäuse 70 um die Drehachse der Scheibenräder 54 verschwenkbar, wie durch die Pfeile angedeutet, um die Auswurfrichtung der gehäckselten Erntegutreste einstellen zu können. Die Auswurfstutzen 62 können manuell oder durch einen geeigneten Antrieb in eine vorgebbare Stellung verbracht oder kontinuierlich nach links und rechts verschwenkt werden, um die Erntegutreste gleichmäßig auf dem Feld zu verteilen.

In Figur 5 ist eine dritte Ausführungsform einer erfindungsgemäßen Häckseleinrichtung wiedergegeben. Hier wird der Erntegutrestefluss - wie in der zweiten Ausführungsform - in zwei Teilströme aufgeteilt, die sich trichterförmig nach unten verengen. Dementsprechend sind ebenfalls jeweils zwei Paare unterer und oberer Zuführwalzen 44 vorgesehen. Im Unterschied zur zweiten Ausführungsform ist jedoch nur ein einziges Scheibenrad 54 vorgesehen, dem das Gut durch zwei Einlassöffnungen 68 zugeführt wird. Die beiden Einlassöffnungen 68 liegen sich beidseits der vertikalen Drehachse des Scheibenrads 54 radial gegenüber. Anhand des in Figur 6 dargestellten horizontalen Schnitts durch die Häckseleinrichtung der Figur 5 ist erkennbar, dass den Einlassöffnungen 68 jeweils eine Gegenschneide 58 benachbart ist. Die Messer 56 des Scheibenrads 54 zerteilen die Erntegutreste im Zusammenwirken mit den Gegenschneiden 58. Das Gehäuse 70 des Scheibenradhäckslers 42 besteht aus zwei Teilen mit jeweils einem daran angeformten oder angebrachten Auswurfstutzen 62, die gemeinsam mit den mit ihnen verbundenen übrigen Teilen des Gehäuses 70 separat und aneinander gleitend in Richtung der Pfeile um eine vertikale Achse verschwenkbar sind.

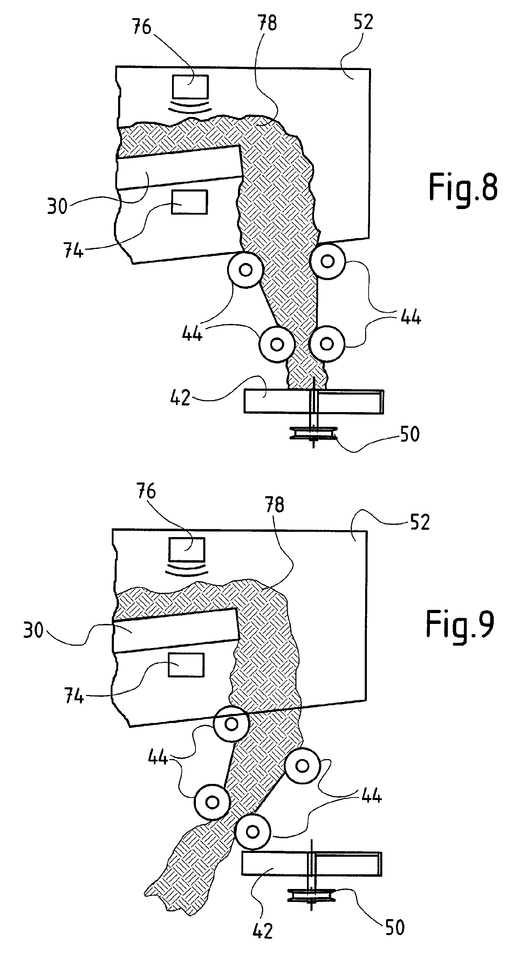

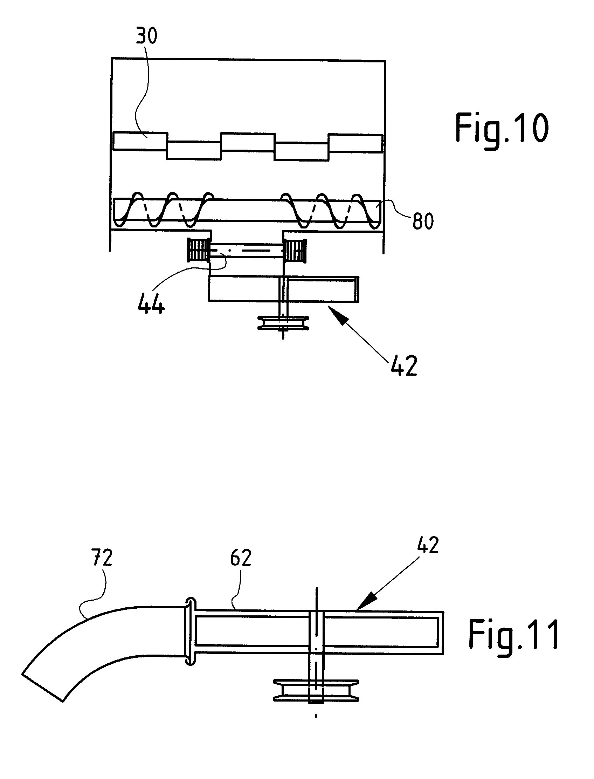

In Figur 7 ist eine vierte Ausführungsform einer erfindungsgemäßen Häckseleinrichtung dargestellt. Das Scheibenrad 54 entspricht den bereits beschriebenen und kann mit jeder der zuvor beschriebenen Ausführungsformen der Erfindung kombiniert werden. Das Gehäuse 70 mit dem daran angeformten Auswurfstutzen 62 ist im Unterschied zu den anderen dargestellten Ausführungsformen mit einem um eine vertikale Achse verschwenkbaren Endstück 72 versehen, wie durch den Pfeil angedeutet, um die Auswurfrichtung der Erntegutreste vorzugeben. Es ist auch denkbar, das Endstück 72 gekrümmt auszuführen und um die Längsachse des Auswurfstutzens 62 oder eine dazu senkrechte Achse drehbar zu gestalten, wie bei der in Figur 11 dargestellten Ausführungsform der Erfindung.

Eine fünfte Ausführungsform einer erfindungsgemäßen Häckseleinrichtung ist in den Figuren 8 und 9 dargestellt. Es ist eine einen Permanentmagneten 76 und eine Induktionsspule 74 umfassende Fremdkörpernachweiseinrichtung vorgesehen, die zum Nachweis eventuell in der Matte 78 der zu häckselnden Erntegutreste enthaltener Fremdkörper eingerichtet ist. Der Permanentmagnet 76 stellt ein Magnetfeld bereit, das die Induktionsspule 74 durchdringt. Ein eventuell in der Matte 78 enthaltener Fremdkörper, insbesondere wenn er ferromagnetisches Material enthält, ändert die Flussdichte des Magnetfelds, so dass in der Induktionsspule 74 eine Induktionsspannung induziert wird. In einem derartigen Fall veranlasst eine mit der Induktionsspule 74 verbundene, in der Zeichnung nicht dargestellte Steuerung durch geeignete Antriebselemente, dass ein Träger, der die Zuführwalzen 44 haltert, aus der in Figur 8 gezeigten Betriebsposition, in der die Matte 78 dem Scheibenradhäcksler 42 zugeführt wird, in eine Außerbetriebsposition verschwenkt wird, wie sie in Figur 9 dargestellt ist, und in der die Matte 78 der Erntegutreste am Scheibenradhäcksler 42 vorbeigeleitet wird. Es wäre auch denkbar, die Zuführwalzen 44 nicht wie in Figur 9 nach vorn zu verschwenken, so dass die Matte 78 vor dem Scheibenradhäcksler 42 auf den Erdboden fällt, sondern nach hinten zu verschwenken, so dass die Matte 78 auf der Oberseite des Gehäuses 70 des Scheibenradhäckslers 42 entlang gleitet und dann nach unten fällt, bzw. direkt auf den Erdboden fällt. Nach Ablauf einer gewissen Zeit, die mindestens der Laufzeit eines Fremdkörpers bis zum Scheibenradhäcksler 42 entspricht, kann die Steuerung die Rückkehr des Trägers mit den Zuführwalzen 44 in die Betriebsposition veranlassen. Auf diese Weise erübrigt sich eine Unterbrechung des Betriebs des Mähdreschers 10. Das Verschwenken des Trägers der Zuführwalzen 44 kann auch dazu dienen, zwischen Häckselbetrieb und Schwadablagebetrieb zu wechseln. Denkbar ist aber auch, die ganze Häckseleinrichtung zum Schwadablagebetrieb nach hinten zu verschieben und/oder zu verschwenken.

In Figur 10 ist eine sechste Ausführungsform einer Häckseleinrichtung dargestellt. Die von den Schüttlern 30 ausgeworfenen Erntegutreste werden durch eine rotativ angetriebene Förderschnecke 80 in die Mitte des Mähdreschers 10 gefördert und dort nach unten einem Paar horizontal beabstandeter, in Fahrtrichtung hintereinander angeordneter Zuführwalzen 44 zugeführt, die die Erntegutreste zwischen sich nach unten fördern und dem Scheibenradhäcksler 42 zuführen.

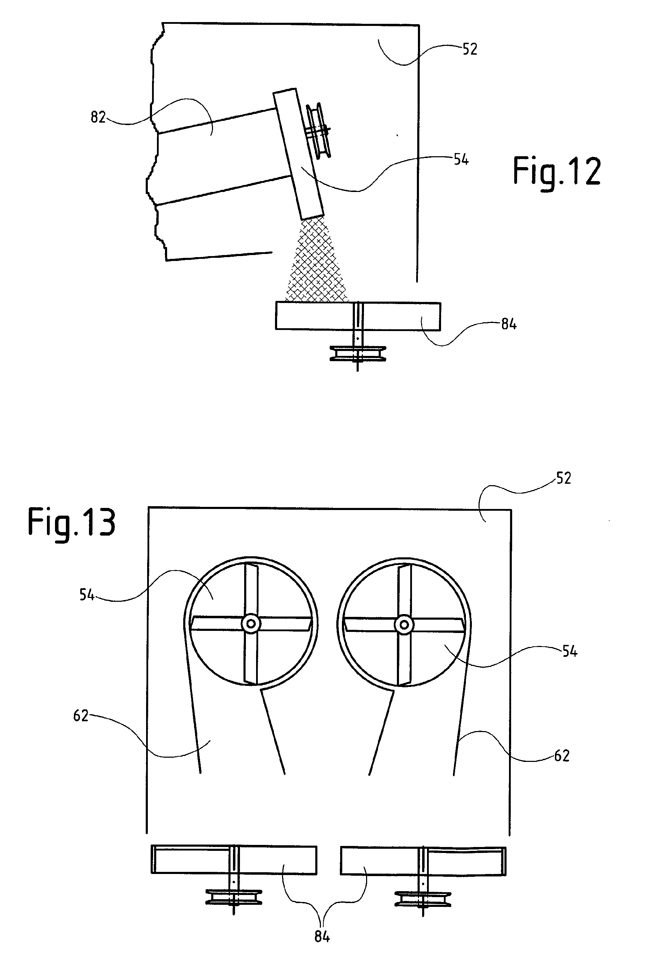

Die Figuren 12 und 13 zeigen eine achte Ausführungsform der Erfindung. Das Scheibenrad 54 ist an der Rückseite eines Rotors 82 eines Mähdreschers angeordnet und rotiert um eine parallel oder sogar koaxial zur Drehachse des Rotors 82 verlaufende Achse. Der Rotor 82 kann ein Dresch- und Trennrotor sein, oder der Rotor eines Hybridmähdreschers mit einer normalen, quer zur Vorwärtsfahrtrichtung angeordneten Dreschtrommel, der zwei nebeneinander angeordnete Trennrotoren folgen. In der Figur 13 ist erkennbar, dass zwei Rotoren 82 seitlich nebeneinander angeordnet sind, denen jeweils ein Scheibenrad 54 folgt. Jedes Scheibenrad 54 nimmt die Erntegutreste auf, die von dem Rotor 82 ausgeworfen werden, zerkleinert sie und wirft sie durch einen Auswurfschacht 62 nach unten aus. Dort werden die Erntegutreste mittels an sich bekannter, um eine etwa vertikale Achse rotierende Streuteller 84 über ein Feld verteilt. Bei dieser Ausführungsform entfallen separate Zufuhr- und Vorverdichtungseinrichtungen.

## Patentansprüche

1. Mähdrescher (10), mit einer Gutaufnahmeeinrichtung zur Aufnahme von Erntegut von einem Feld, einer Dresch- und Trenneinrichtung und einer Häckseleinrichtung zum Zerhäckseln von Erntegutresten, die ihr von der Dresch- und Trenneinrichtung zugeführt werden, **dadurch gekennzeichnet, dass** die Häckseleinrichtung mindestens einen Scheibenradhäcksler (42) umfasst.

2. Mähdrescher (10) nach Anspruch 1, **dadurch gekennzeichnet, dass** der Scheibenradhäcksler (42) ein Scheibenrad (54) aufweist, das um eine wenigstens näherungsweise vertikale Achse in Drehung versetzbar ist.

3. Mähdrescher (10) nach Anspruch 1 oder 2, **dadurch gekennzeichnet, dass** die Erntegutreste durch eine Zuführeinrichtung mit wenigstens einem gegensinnig rotierenden Paar von Zuführwalzen (44) dem Scheibenradhäcksler (42) zugeführt werden, wobei die Zuführwalzen (44) die Erntegutreste vorverdichten und dem Scheibenradhäcksler (42) zwangsweise zuführen.

4. Mähdrescher (10) nach Anspruch 3, **dadurch gekennzeichnet, dass** die Drehzahl der Zuführwalzen (44) zur Schnittlängeneinstellung variierbar ist.

5. Mähdrescher (10) nach einem der Ansprüche 1 bis 4, **dadurch gekennzeichnet, dass** der Scheibenradhäcksler (42) ein Scheibenrad (54) mit daran angebrachten Messern (56) aufweist, die mit einer vorzugsweise der Einlassöffnung (68) des Scheibenradhäckslers (42) benachbarten Gegenschneide (58) zusammenwirken.

6. Mähdrescher (10) nach einem der Ansprüche 1 bis 5, **dadurch gekennzeichnet, dass** zwei oder mehrere Scheibenräder (54) seitlich nebeneinander angeordnet sind.

7. Mähdrescher (10) nach einem der Ansprüche 1 bis 6, **dadurch gekennzeichnet, dass** der Scheibenradhäcksler (42) zwei seiner Drehachse radial gegenüberliegende Einlassöffnungen (68) aufweist, durch die jeweils ein Teil des Flusses der Erntegutreste zugeführt wird.

8. Mähdrescher (10) nach einem der Ansprüche 1 bis 7, **dadurch gekennzeichnet, dass** der Scheibenradhäcksler (42) einen um eine Hochachse schwenkbaren oder drehbaren Auswurfschacht (62) oder ein schwenkbares oder drehbares Endstück (72) des Auswurfschachts (62) aufweist.

9. Mähdrescher (10) nach einem der Ansprüche 1 bis 8, **dadurch gekennzeichnet, dass** dem Fluss der Erntegutreste stromauf des Scheibenradhäckslers (42) eine Fremdkörpernachweiseinrichtung zugeordnet ist, die mit einer Einrichtung zum Unterbrechen oder Vorbeileiten des Gutflusses am Scheibenradhäcksler (42) im Falle der Erkennung eines Fremdkörpers verbunden ist.

10. Mähdrescher (10) nach einem der Ansprüche 1 bis 9, **dadurch gekennzeichnet, dass** der Scheibenradhäcksler (42) am Auswurfsende eines Rotors (84) des Mähdreschers (10) angeordnet ist, und die gehäckselten Erntegutreste einem Streuteller (84) zuführt.
